# EUROPEAN PATENT APPLICATION

(11) **EP 3 279 983 A1**
(43) Date of publication of application: **07.02.2018**
(21) Application number: 16183032.8
(22) Date of filing: 05.08.2016
(51) Int. Cl.: H01M 4/66, H01M 4/70, H01M 4/75, H01M 10/0525

(54) **CURRENT COLLECTOR FOIL**

(71) Applicant: Lithium Energy and Power GmbH & Co. KG, 70469 Stuttgart (DE)
(72) Inventor: Deromelaere, Gaetan, 70806 Kornwestheim (DE); Konishi, Daisuke, 70191 Stuttgart (DE); Friedrich, Marco, 71638 Ludwigsburg (DE); Klinsmann, Markus, 70195 Stuttgart (DE); Ashida, Yuji, 70191 Stuttgart (DE)
(74) Representative: Bee, Joachim

(57) **Abstract**

A Current collector foil for an energy storage device, in particular a Li-ion battery, comprises a plurality of first foils (12) and a plurality of second foils (14) for providing an electric conductivity, wherein the plurality of first foils (12) and the plurality of second foils (14) are intertwined or braided together, wherein first foils (12) and the second foils (14) have different conductivities. Thereby, a current collector foil with an effective anisotropic electrical conductivity can be provided.

## Description

The present invention relates to a current collector foil for an energy storage device, in particular a Li-ion battery.

### Background art

Li-ion batteries are vital energy storage devices due to their high specific energy density. They are predominantly used in consumer electronics; however, improvements in safety are required for full acceptance of Li-ion cells in transportation applications, such as electric vehicles. The presence of a volatile, combustible electrolyte and an oxidizing agent, like lithium oxide cathodes, makes the Li-ion cell susceptible to fires and explosions. Internal short circuits or mechanical damage, for example caused within certain abuse tests such as the nail penetration test, create local current paths over which the cell discharges. The corresponding electric currents are accompanied by a strongly localized Joule heating. This leads to a strong increase of the local temperature at the internal short circuit or nail penetration location. When a critical temperature is reached, exothermic chemical reactions are initiated between the electrodes and the electrolyte, raising the cell's internal pressure and temperature even more. The increased temperature accelerates these chemical reactions, producing more heat. A possible measure to prevent catastrophic thermal failure in commercial Li-ion batteries is the reduction of the localized current around the nail or internal short circuit by an external low ohmic current path, the so called fast discharge device.

The electric conductivity of a standard current collector foil, typically made of aluminum or copper, is isotropic, like the resistance to electric current is independent from its direction. Hence, the electric conductivities within the standard current collector foil are equal. The current collector foil will be used in a stacked type Li-ion cell or a cut-out of a current collector foil in a wound jell roll type Li-ion cell.

The electric current provided by an arbitrary portion of the electrode layer can be split into two parts during an internal short circuit or an external damage, like during a nail penetration test. One part of the electric current flows over the internal short circuit or nail penetration location, and the second part of the electric current runs through the external current path. Since the conductivity of the current collector foil is isotropic and comparatively good, the ratio of current flowing towards nail and external current path, for example to a discharge device, mainly depends on the resistances of the conduction path at the nail and of the external current path. Only to a minor extent it depends on the precise location of the portion of electrode material with respect to the internal short or nail penetration location and the external current path.

### Disclosure of the invention

The present invention has been made to solve above-described problems. An object of the present invention is to provide a current collector foil with improved safety measures against internal short circuits and external damage.

The problems are solved according to the invention by a current collector foil with the features of claim 1. Preferred embodiments of the invention are indicated in the dependent claims, which may constitute an aspect of the invention individually or in combination.

According to the present invention, a current collector foil for an energy storage device, in particular a Li-ion battery comprises a plurality of first foils and a plurality of second foils for providing an electric conductivity, wherein the plurality of first foils and the plurality of second foils are intertwined or braided together, wherein the first foils and the second foils have different conductivities.

The term foil is describing a foil or thread which can be used for intertwining or braiding. The term energy storage device is describing a device which stores energy which has been produced at one time for use at a later time. In particular it is referring to Batteries, preferably Li-ion Batteries.

By using first foils or threads and second foils or threads, which are intertwined, in particular woven, or braided together, an effective anisotropic electrical conductivity can be created. Thereby, anisotropic electrical conduction paths within a jelly roll of an energy storage device or a stack of electrodes can be modified, so that less current is flowing towards the internal short circuit or nail penetration location and more current runs through the external current paths. Thus the intertwined or braided foils are capable of conducting the current to a device, for example a device using the current or in case of a short circuit to a discharge device and/or low ohmic discharge device, in particular a fast discharge device. Thereby, the effectiveness of an external current path, for example an external current path to a discharge device and/or low ohmic discharge device, in particular a fast discharge device, shall be improved and the safety of the energy storage device can be improved.

Thus, a current collector foil with improved safety measures against internal short circuits and external damage can be provided.

Preferably, the first foils and second foils are made of a material comprising metal, in particular aluminum, copper, nickel, nickel plated copper or gold.

Preferably, the first foils and second foils have different kinds of mechanical, thermal and/or chemical treatments and/or are laser structured. The mechanical treatment could be for example rolling, stamping or cutting. The thermal treatment could be for example hardening, infrared heating, inductive heating or frost shocking. The chemical treatment could be for example etching. The term laser structuring describes a process, in which the surface of the foils can be roughened. Thereby, the effective anisotropic electrical conductivity can be created.

In a preferred embodiment have the first foils and the second foils a different thickness. Thereby, the effective anisotropic electrical conductivity can be created.

Preferably, the first foils are interlaced at right angles to the second foils. In particular the first foils and the second foils are intercrossing each other horizontal and vertical. By providing for example the a plurality of first foils horizontally intertwined and a plurality of second foils vertically intertwined to be intercrossed with the first foils an extension of the current collector foil in both horizontal and vertical direction can be minimized. In particular due to the arrangement of the first foils and second foils a preferred current collector foil can be created, which has a good anisotropic electrical conductivity. Furthermore, the pattern of intertwining is not limited to the one described above, but instead shall include arbitrary schemes like alternating arrangement of a first foil and a second foil during the vertical and horizontal arrangement.

In particular the ends of the first foils and second foils of the current collector foil, which are creating the borders of the current collector foil, are connected to each other by melting, gluing, bonding, welding, soldering, stitching or any other suitable connection method. Thereby, the form of the current collector foil can be fixed and a movement of the foils in horizontal or vertical direction can be prevented. In particular the first foils and second foils may comprise a top side and on the opposite side of the top side a back side, wherein the top side may be coated with a first electrode material, in particular an anode material, and the back side may be coated with a second electrode material, in particular a cathode material. In particular, the coating can be produced on the first foils and second foils after the first foils and second foils have been intertwined. Thereby, the damaging of the coating can be prevented or at least minimized.

Furthermore, according to the present invention an energy storage device, in particular a Li-ion battery comprises at least one current collector foil, which is described above. Thereby, an energy storage device can be provided which has at least one current collector foil which has an improved effective anisotropic electrical conductivity. Thus, the energy storage device has less current which is flowing towards an internal short circuit or nail penetration location. Instead more current runs through the paths spaced apart from the location of the internal short circuit or nail penetration location. As a consequence less current flows through the internal short circuit or the nail penetration location, which generates less heating, localized at the internal short circuit or the nail, and therefore lowers the risk of a thermal runaway. Thereby, the effectiveness of an external current path, for example an external current path to a discharge device and/or low ohmic discharge device, in particular a fast discharge device, can be improved. Furthermore, the safety of the energy storage device can be improved.

In a preferred embodiment a low resistance path of the current collector foil is connected to an external current path and/or low ohmic discharge device, in particular a fast discharge device. Due to the anisotropy of the material, the current that crosses over from the first foils to the second foils is smaller than the current along the first foil and/or the second foil. Therefore, if there is for example an impact on the cell electrodes for example at a first foil or a second foil, the current can be drawn out of the cell using an external current path. As there is anisotropy between the first foil and the second foil at the impact, the exchange current between the first foil and the second foil will be low. The current will be taking the path of lowest resistance. For example, if the resistance of the second foil is lower than the resistance of the first foil, and the impact is at an interface between a first foil and the second foil, then the current flows across the area of the second foil. As a result of the anisotropy and the lower resistance of the second foil, the current flows only through the area of the second foil and not of the first foil. In particular the lower resistance areas are chosen to attach the low resistance external current pathway, for example the fast discharge device.
Further according to the present invention a method for producing a current collector foil as described above is provided, comprising the steps of: providing first foils, providing second foils, and interlacing the first foils and second foils by intertwining or breading.

### Brief description of the drawings

The above and/or other aspects and advantages will become more apparent from the following detailed description of example embodiments, taken in conjunction with the accompanying drawings, in which
Fig. 1 is a perspective view of a intertwined current collector foil; and
Fig. 2 is a perspective view of the intertwined current collector foil of Fig. 1 during a nail penetration test.

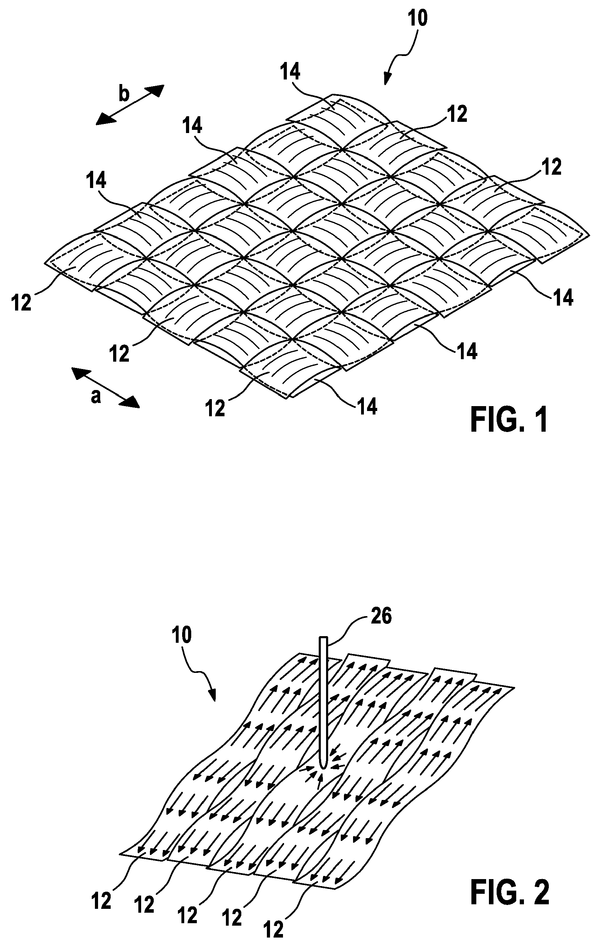

Fig. 1 shows an intertwined or braided current collector foil 10 for an energy storing device, like a Battery, in particular for a Lithium-Ion Battery. By intertwining or braiding foils with different conductivities one can achieve an effective anisotropic conductivity. This is demonstrated in FIG. 1 by two different sets of foils 12, 14. A first foil 12 is interlaced at right angles with a second foil 14 to form the current collector foil 10, so that the first foil 12 and the second foil are intercrossing each other horizontal and vertical. In this context, an external current path, for example an external current path to a discharge device and/or low ohmic discharge device, in particular a fast discharge device, the term 'different materials' is related to different kinds of mechanical, thermal and/or chemical treatment. The effective anisotropic conductivity is depicted by the arrows a, b. The pattern of intertwining is not limited to the one shown in FIG. 1, but instead shall include arbitrary schemes. Furthermore, the endings of the foils 12, 14, which are creating the borders of the current collector foil 10, can be connected to each to prevent the movement of the foils 12, 14 in horizontal or vertical direction.

Fig. 2 shows the working principle of the intertwined or braided current collector foil 10. The anisotropic conductivity results in a modified distribution of the current provided by each portion of the current collector foil 10. The total resistance of the current path through the internal short circuit or nail penetration location increases in comparison to the one through the external current path for most parts of the current collector foil 10. For the intertwining pattern shown here, this is explained in more detail: For the portions of electrode material situated between internal short circuit or nail penetration location and those boundaries connected to the external current path, the current is split as known in the art, corresponding mainly to the total resistance of the conduction path at the internal short circuit or nail 16 and a not shown fast discharge device. This situation is found in the center stripe in FIG. 2, which is penetrated by a nail 16. However, in all other parts of the current collector foil 10, in example all other stripes in FIG. 2, the electric current from the electrode material needs to flow at least partially in direction of second foil 14, as shown in FIG. 1. Since the electric conduction is significantly worse in this direction, depending on the choice of material and specific design, the total resistance of current flowing towards the internal short circuit or nail 16 is decreased. The flow of the current is indicated by the arrows inside the foils 12. Hence, the current is more likely to flow in direction of first foil 12, as shown in FIG. 1, in example towards the not shown fast discharge device. As a consequence, less current flows through the internal short circuit or nail penetration location. This generates less Joule heating, localized at the internal short circuit or nail 16, and therefore lowers the risk of a thermal runaway.

Thereby, the safety of the energy storage device can be increased.

## Claims

1. Current collector foil for an energy storage device, in particular a Li-ion battery, comprising
a plurality of first foils (12) and a plurality of second foils (14) for providing an electric conductivity,
wherein the plurality of first foils (12) and the plurality of second foils (14) are intertwined or braided together,
wherein the first foils (12) and the second foils (14) have different conductivities.

2. Current collector foil according to claim 1, wherein the first foils (12) and second foils (14) are made of a material comprising metal, in particular aluminum, copper, nickel, nickel plated copper or gold.

3. Current collector foil according to claim 1 or 2, wherein the first foils (12) and second foils (14) have different kinds of mechanical, thermal and/or chemical treatments, and/or are laser structured.

4. Current collector foil according to one of the claims 1 to 3, wherein the first foils (12) and the second foils (14) have a different thickness.

5. Current collector foil according to one of the claims 1 to 4, wherein the first foils (12) are interlaced at right angles to the second foils (14).

6. Energy storage device, in particular a Li-ion battery, comprising at least one current collector foil according to one of the claims 1 to 5.

7. Energy storage device according to claim 6, **characterized in that** a low resistance path of the current collector foil is connected to an external current path and/or low ohmic discharge device, in particular a fast discharge device.

8. Method for producing a current collector foil according to one of the claims 1 to 6, comprising the steps of:
providing first foils (12),
providing second foils (14), and
interlacing the first foils (12) and second foils (14) by intertwining or breading.
